(19) Europäisches Patentamt
European Patent Office
Office européen des brevets

(11) **EP 4 800 056 A1**

(12) **EUROPEAN PATENT APPLICATION**
published in accordance with Art. 153(4) EPC

(43) Date of publication:
**02.09.2026 Bulletin 2026/36**

(21) Application number: **24882532.5**

(22) Date of filing: **25.10.2024**

(51) International Patent Classification (IPC):
***C08J 3/12*** *(2006.01)*

(52) Cooperative Patent Classification (CPC):
**C08J 3/12; C08K 5/32; C08L 27/18; C08L 71/00**

(86) International application number:
**PCT/JP2024/038238**

(87) International publication number:
**WO 2025/089426 (01.05.2025 Gazette 2025/18)**

(84) Designated Contracting States:
**AL AT BE BG CH CY CZ DE DK EE ES FI FR GB GR HR HU IE IS IT LI LT LU LV MC ME MK MT NL NO PL PT RO RS SE SI SK SM TR**
Designated Extension States:
**BA**
Designated Validation States:
**GE KH MA MD TN**

(30) Priority: **25.10.2023 JP 2023183307**

(71) Applicant: **Daikin Industries, Ltd.**
**Osaka-shi, Osaka 530-0001 (JP)**

(72) Inventors:
- **FUKAMI, Dai**
**Osaka-Shi, Osaka 530-0001 (JP)**
- **OSAFUNE, Yuma**
**Osaka-Shi, Osaka 530-0001 (JP)**
- **KATO, Manabu**
**Osaka-Shi, Osaka 530-0001 (JP)**
- **KAWAHARA, Kazuya**
**Osaka-Shi, Osaka 530-0001 (JP)**

(74) Representative: **Hoffmann Eitle**
**Patent- und Rechtsanwälte PartmbB**
**Arabellastraße 30**
**81925 München (DE)**

# (54) POLYTETRAFLUOROETHYLENE GRANULATED POWDER

(57) Provided is a polytetrafluoroethylene granulated powder that enables production of a molded article exhibiting little coloration and excellent crack resistance. The polytetrafluoroethylene granulated powder has a water content of 0.020% by mass of less and a Z value of 90 or more.

EP 4 800 056 A1

## Description

TECHNICAL FIELD

The disclosure relates to polytetrafluoroethylene granulated powders.

BACKGROUND ART

Conventionally known methods for producing (granulating) polytetrafluoroethylene granular powder include a method of stirring the powder in water containing an organic solvent, a method of stirring the powder in warm water, and a method of applying mechanical force to the powder (tumbling the powder) with the powder being wet with a small amount of an organic solvent.

Patent Literature 1 and Patent Literature 2 disclose methods in which polytetrafluoroethylene powder is wet with a predetermined surfactant aqueous solution and then subjected to mechanical force.

CITATION LIST

- Patent Literature

Patent Literature 1: JP H10-298300 A
Patent Literature 2: JP H08-208929 A

SUMMARY OF INVENTION

- Technical Problem

The disclosure aims to provide a polytetrafluoroethylene granulated powder that enables production of a molded article exhibiting little coloration and excellent crack resistance.

- Solution to Problem

The disclosure (1) relates to a polytetrafluoroethylene granulated powder having a water content of 0.020% by mass or less and a Z value of 90 or more.

The disclosure (2) relates to the polytetrafluoroethylene granulated powder according to the disclosure (1), wherein a granulation binder used for granulation is a nonionic surfactant aqueous solution.

The disclosure (3) relates to the polytetrafluoroethylene granulated powder according to the disclosure (2), wherein the nonionic surfactant aqueous solution includes at least one selected from the group consisting of a polyoxyethylene alkyl ether, a segmented polyalkylene glycol, and an alkylamine oxide.

The disclosure (4) relates to the polytetrafluoroethylene granulated powder according to any one of the disclosures (1) to (3), wherein the polytetrafluoroethylene granulated powder has an average particle size of 200 to 700 μm.

The disclosure (5) relates to the polytetrafluoroethylene granulated powder according to the disclosure (4), wherein the average particle size is 200 to 600 μm.

The disclosure (6) relates to the polytetrafluoroethylene granulated powder according to any one of the disclosures (1) to (5), wherein the polytetrafluoroethylene granulated powder has an apparent density of 0.60 to 0.90 g/mL.

The disclosure (7) relates to the polytetrafluoroethylene granulated powder according to any one of the disclosures (1) to (6), wherein the polytetrafluoroethylene granulated powder has an average aspect ratio of 1.25 or less.

The disclosure (8) relates to the polytetrafluoroethylene granulated powder according to any one of the disclosures (1) to (7), wherein the polytetrafluoroethylene granulated powder has a high-temperature volatile content of 0.050% by mass or less.

The disclosure (9) relates to the polytetrafluoroethylene granulated powder according to any one of the disclosures (1) to (8), wherein the water content is 0.001% by mass or less.

- Advantageous Effects of Invention

The disclosure can provide a polytetrafluoroethylene granulated powder that enables production of a molded

article exhibiting little coloration and excellent crack resistance.

BRIEF DESCRIPTION OF DRAWINGS

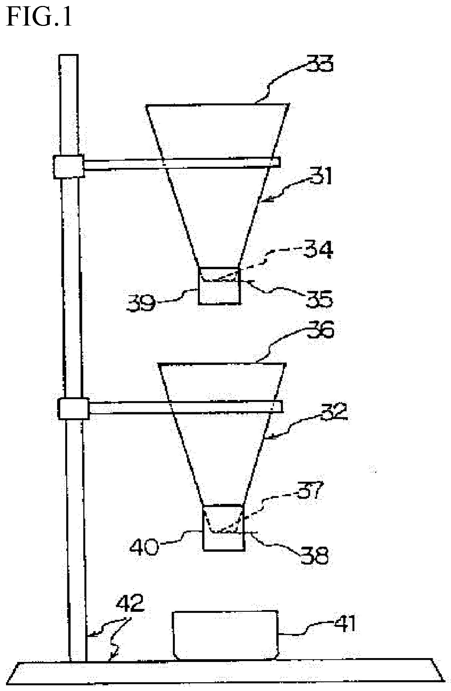

FIG. 1 is a schematic explanatory diagram of an apparatus used for determining the flowability of a granulated powder.

DESCRIPTION OF EMBODIMENTS

Hereinafter, the disclosure will be described in detail.

The disclosure relates to a polytetrafluoroethylene (PTFE) granulated powder having a water content of 0.020% by mass or less and a Z value of 90 or more.

Because the PTFE granulated powder of the disclosure has a water content and a Z value within specified ranges, the PTFE granulated powder enables production of a molded article exhibiting little coloration and excellent crack resistance.

The PTFE granulated powder of the disclosure has a water content of 0.020% by mass or less. In order to produce a molded article exhibiting further improved crack resistance, the water content is preferably 0.015% by mass or less, more preferably 0.010% by mass or less, still more preferably 0.005% by mass or less, further preferably 0.003% by mass or less, even more preferably 0.002% by mass or less, particularly preferably 0.001% by mass or less. The lower limit may be, but is not limited to, 0% by mass.

The water content is determined by the following method.

Before and after heating approximately 20 g of the PTFE granulated powder at 150°C for 2 hours, the masses are measured and the water content is calculated according to the following equation. Three samples are taken and, for each sample, the water content is calculated. The average thereof is then calculated, which is adopted as the water content.

Water content (% by mass) = [(mass (g) of PTFE granulated powder before heating) - (mass (g) of PTFE granulated powder after heating)]/(mass (g) of PTFE granulated powder before heating) $\times$ 100

The PTFE granulated powder of the disclosure has a Z value of 90 or more. In order to produce a molded article exhibiting further reduced coloration, the Z value is preferably 91 or more, more preferably 95 or more, still more preferably 100 or more, while the Z value may be 110 or less.

The Z value is determined by the following method.

A 200-g portion of the PTFE granulated powder is charged into a mold having a diameter of 50 mm and held under a molding pressure of 300 kg/cm$^2$ for 5 minutes. The obtained preform (approximately 50 mm in diameter and 50 mm in thickness) is heat-treated at 370°C for 2 hours. The resulting molded article is cut horizontally on a lathe at a position (central portion) approximately 25 mm from an end, and the Z value at the center of the cut portion is determined based on the Z-value determination method of the XYZ color system defined by the International Commission on Illumination.

In order to achieve excellent handleability, the PTFE granulated powder of the disclosure preferably has an average particle size of 200 μm or more, more preferably 250 μm or more, still more preferably 300 μm or more, even more preferably 350 μm or more, while preferably 700 μm or less, more preferably 650 μm or less, still more preferably 600 μm or less, even more preferably 550 μm or less.

The average particle size is determined by the following method.

Standard 10-, 20-, 32-, 48-, 60-, and 80-mesh (inch mesh) sieves are stacked in this order from the top and the PTFE granulated powder is placed on the 10-mesh sieve. The sieves are vibrated to allow finer PTFE granulated powder particles to fall downward to lower sieves and the proportion of the PTFE granulated powder retained on each sieve is determined in % by mass. On log-probability paper, the cumulative percentage of the retained proportion is plotted (on the vertical axis) against the opening size of each sieve (on the horizontal axis). The plotted points are connected by a straight line and the particle size corresponding to 50% by mass on this straight line is determined, which is defined as the average particle size.

In order to achieve excellent handleability, the PTFE granulated powder of the disclosure preferably has an apparent density of 0.60 g/mL or more, more preferably 0.65 g/mL or more, still more preferably 0.70 g/mL or more, even more preferably 0.75 g/mL or more, while the apparent density may be 0.90 g/mL or less.

The apparent density is determined in accordance with JIS K6891.

In order to achieve excellent handleability, the PTFE granulated powder of the disclosure preferably has an average aspect ratio of 1.25 or less, more preferably 1.20 or less, still more preferably 1.15 or less, even more preferably 1.10 or less, particularly preferably 1.05 or less, while the average aspect ratio may be 1.00 or more.

The average aspect ratio is determined by observing the PTFE granulated powder with a video microscope,

performing image analysis on 50 or more particles randomly selected, and calculating the average of the ratios of the major axis to the minor axis.

In order to produce a molded article exhibiting further reduced coloration and further improved crack resistance, the PTFE granulated powder of the disclosure preferably has a high-temperature volatile content of 0.050% by mass or less, more preferably 0.040% by mass or less, still more preferably 0.030% by mass or less, even more preferably 0.020% by mass or less, particularly preferably 0.010% by mass or less, while the high-temperature volatile content may be 0.0001% by mass or more, may be 0.001% by mass or more, may be 0.002% by mass or more, or may be 0.003% by mass or more.

The high-temperature volatile content is calculated in accordance with JIS K6891 and according to the following equation using the mass of the PTFE granulated powder measured after heating at 370°C for 2 hours.

High-temperature volatile content (% by mass) = [(mass (g) of PTFE granulated powder before heating) - (mass (g) of PTFE granulated powder after heating)]/(mass (g) of PTFE granulated powder before heating) $\times$ 100

The PTFE granulated powder of the disclosure preferably has a tensile strength of 25 MPa or more, more preferably 30 MPa or more, still more preferably 35 MPa or more, even more preferably 38 MPa or more, particularly preferably 40 MPa or more, while the tensile strength may be 60 MPa or less.

The PTFE granulated powder of the disclosure preferably has an elongation of 150% or more, more preferably 200% or more, still more preferably 250% or more, even more preferably 290% or more, particularly preferably 300% or more, while the elongation may be 500% or less.

The tensile strength and the elongation are determined by the following method.

A 5-g portion of the PTFE granulated powder is charged into a mold having dimensions of 97 mm $\times$ 18 mm, gradually pressurized up to approximately 300 kg/cm$^2$, and held at the same pressure for 2 minutes, whereby a preform is prepared. The preform is taken from the mold and placed in an electric furnace maintained at 370°C, followed by firing for 5.5 hours and cooling at 50°C/hr, whereby a fired article is obtained. A JIS No. 3 dumbbell-shaped test specimen is punched out of this fired article, and tensile testing is performed in accordance with JIS K6891-58 using an autograph having a total load capacity of 500 kg at a tensile speed of 200 mm/min, thereby measuring the stress at break and the elongation (elongation at break).

In order to achieve excellent handleability, the PTFE granulated powder of the disclosure preferably has a flowability of 0.5 times or more, more preferably 1.0 times or more, still more preferably 1.5 times or more, while the flowability may be 5 times or less.

The flowability is determined by the method described in the EXAMPLES below.

The PTFE in the PTFE granulated powder of the disclosure may be a homopolymer of tetrafluoroethylene (TFE), or may be a modified PTFE including polymerized units based on TFE (TFE units) and polymerized units based on a modifying monomer copolymerizable with TFE (hereinafter also referred to as "modifying monomer units").

The homopolymer of TFE refers to a polymer in which the amount of the modifying monomer units is less than 0.0001% by mass based on the total polymerized units.

The modified PTFE may include 99.0% by mass or more of TFE units and 1.0% by mass or less of modifying monomer units. The modified PTFE may consist only of TFE units and modifying monomer units.

The modified PTFE preferably contains the modifying monomer units in an amount ranging from 0.0001 to 1.0% by mass based on the total polymerized units. The lower limit of the amount of the modifying monomer units is more preferably 0.001% by mass, still more preferably 0.010% by mass, further preferably 0.015% by mass, even more preferably 0.020% by mass, particularly preferably 0.050% by mass. The upper limit of the amount of the modifying monomer units is preferably 0.80% by mass, more preferably 0.60% by mass, still more preferably 0.50% by mass, further preferably 0.40% by mass, even more preferably 0.30% by mass, particularly preferably 0.20% by mass.

The modifying monomer unit herein refers to a portion that is part of the molecular structure of PTFE and is derived from a modifying monomer.

The amounts of the respective polymerized units described above can be determined by appropriately combining NMR, FT-IR, elemental analysis, and X-ray fluorescence analysis depending on the type of monomer.

The modifying monomer may be any monomer copolymerizable with TFE, and examples thereof include perfluoroolefins such as hexafluoropropylene (HFP); hydrogen-containing fluoroolefins such as trifluoroethylene and vinylidene fluoride (VDF); perhaloolefins such as chlorotrifluoroethylene (CTFE); perfluorovinyl ethers; perfluoroallyl ethers; (perfluoroalkyl)ethylenes; and ethylene. One modifying monomer may be used alone or two or more modifying monomers may be used in combination.

Examples of the perfluorovinyl ethers include, but are not limited to, unsaturated perfluoro compounds represented by the following formula (A):

$CF_2=CF\text{-}ORf^1$ (A)

wherein $Rf^1$ represents a perfluoro organic group. The "perfluoro organic group" herein refers to an organic group in which all hydrogen atoms bonded to carbon atoms are replaced by fluorine atoms. The perfluoro organic group may contain ether oxygen.

Examples of the perfluorovinyl ethers include perfluoro(alkyl vinyl ethers) (PAVEs) represented by the formula (A) in which $Rf^1$ is a C1-C10 perfluoroalkyl group. The number of carbon atoms of the perfluoroalkyl group is preferably 1 to 5.

Examples of the perfluoroalkyl group in the PAVEs include a perfluoromethyl group, a perfluoroethyl group, a perfluoropropyl group, a perfluorobutyl group, a perfluoropentyl group, and a perfluorohexyl group.

Examples of the perfluorovinyl ethers further include those represented by the formula (A) in which $Rf^1$ is a C4-C9 perfluoro(alkoxyalkyl) group, those in which $Rf^1$ is a group represented by the following formula:

[Chem. 1]

F, CF3, O, F, F, F, O, F3C, F, (O—CF(CF3)—CF2)m—

(wherein m represents 0 or an integer of 1 to 4), and those in which $Rf^1$ is a group represented by the following formula:

[Chem. 2]

$$CF_3CF_2CF_2\text{—}(O\text{—}CF(CF_3)\text{—}CF_2)_n\text{—}$$

(wherein n represents an integer of 1 to 4).

Examples of the (perfluoroalkyl)ethylenes (PFAEs) include, but are not limited to, (perfluorobutyl)ethylene (PFBE) and (perfluorohexyl)ethylene.

Examples of the perfluoroallyl ethers include fluoromonomers represented by the following formula (B):

$CF_2=CF\text{-}CF_2\text{-}ORf^2$ (B)

wherein $Rf^2$ represents a perfluoro organic group.

$Rf^2$ is preferably a C1-C10 perfluoroalkyl group or a C1-C10 perfluoroalkoxyalkyl group. The perfluoroallyl ethers preferably include at least one selected from the group consisting of $CF_2=CF\text{-}CF_2\text{-}O\text{-}CF_3$, $CF_2=CF\text{-}CF_2\text{-}O\text{-}C_2F_5$, $CF_2=CF\text{-}CF_2\text{-}O\text{-}C_3F_7$, and $CF_2=CF\text{-}CF_2\text{-}O\text{-}C_4F_9$, more preferably at least one selected from the group consisting of $CF_2=CF\text{-}CF_2\text{-}O\text{-}C_2F_5$, $CF_2=CF\text{-}CF_2\text{-}O\text{-}C_3F_7$, and $CF_2=CF\text{-}CF_2\text{-}O\text{-}C_4F_9$, still more preferably $CF_2=CF\text{-}CF_2\text{-}O\text{-}CF_2CF_2CF_3$.

The modifying monomer preferably includes at least one selected from the group consisting of CTFE, HFP, perfluoro(methyl vinyl ether) (PMVE), perfluoro(propyl vinyl ether) (PPVE), PFBE, and VDF, more preferably at least one selected from the group consisting of CTFE, HFP, PMVE, and PPVE, still more preferably at least one selected from the group consisting of CTFE, HFP, and PPVE, particularly preferably at least one selected from the group consisting of PPVE and HFP.

The PTFE may have a core-shell structure. Examples of PTFE having a core-shell structure include a modified PTFE containing, within a particle, a core of high-molecular-weight PTFE and a shell of lower-molecular-weight PTFE or modified PTFE. Examples of this modified PTFE include PTFE described in JP 2005-527652 T.

The PTFE preferably has non-melt secondary processability. The non-melt secondary processability refers to a

property of a polymer whose melt flow rate is not measurable at a temperature higher than the melting point in accordance with ASTM D-1238 and D-2116, in other words, a property of a polymer that does not readily flow even in a melting temperature range.

The PTFE may be one obtained by suspension polymerization.

The PTFE granulated powder of the disclosure may contain a filler as long as the filler does not impair the effects. In order to allow a molded article to exhibit less coloration, the filler is preferably a white or transparent filler, and examples include glass fibers, titanium oxide powder, and boron nitride powder. Examples of the filler also include powder of aromatic heat-resistant resin such as polyoxybenzoyl polyester.

The filler is preferably contained in an amount of 30% by mass or less, more preferably 20% by mass or less, still more preferably 15% by mass or less, relative to the PTFE.

In order to reduce coloration of a molded article, the amount of the filler is preferably small, and the PTFE granulated powder of the disclosure is more preferably free of fillers.

The PTFE granulated powder of the disclosure can be produced by granulating a PTFE powder obtained by suspension polymerization. In the case of producing a PTFE granulated powder containing a filler, a powder mixture of a PTFE powder and a filler may be used instead of the PTFE powder.

The suspension polymerization may be performed, for example, by charging a reactor with monomers such as TFE, an aqueous medium, and optionally other additives, stirring the contents of the reactor, maintaining the reactor at a predetermined polymerization temperature, and then adding a predetermined amount of a polymerization initiator to start the polymerization reaction. After the polymerization reaction starts, the monomers such as TFE, the polymerization initiator, a chain-transfer agent, and the like may be additionally fed depending on the purpose.

The resulting suspension-polymerized particles are optionally subjected to steps such as pulverization, drying, and classification, whereby a PTFE powder to be granulated can be obtained.

In order to produce a molded article exhibiting further reduced coloration, the granulation of the PTFE powder is preferably dry granulation using a nonionic surfactant aqueous solution as a granulation binder. Using a nonionic surfactant aqueous solution as a granulation binder for granulation is a preferred embodiment of the disclosure. Using no organic solvent for granulation is also preferred.

The granulation can be performed, for example, by wetting the PTFE powder with a nonionic surfactant aqueous solution, applying mechanical force to the powder, and then drying the powder.

The wetting herein includes a state in which, when a surfactant aqueous solution is added to the PTFE powder, the PTFE powder becomes wet and does not separate from the surfactant aqueous solution.

The nonionic surfactant may be a hydrocarbon-based surfactant or may be a fluorine-free surfactant.

Examples of the nonionic surfactant include polyoxyethylamine oxides, alkylamine oxides, polyoxyethylene alkyl ethers, polyoxyethylene alkylphenyl ethers, polyoxyethylene fatty acid esters, sorbitan fatty acid esters, polyoxyethylene sorbitan fatty acid esters, glycerol esters, polyoxyethylene alkylamines, segmented polyalkylene glycols having a hydrophobic segment composed of C3-C4 poly(oxyalkylene) units and a hydrophilic segment composed of poly(oxyethylene) units, and derivatives thereof.

More specifically, examples of the polyoxyethylamine oxides include dimethyloxyethylamine oxide.

Examples of the alkylamine oxides include dimethylmyristylamine oxide, dimethyllaurylamine oxide, dimethyldecylamine oxide, and dimethyloleylamine oxide.

Examples of the polyoxyethylene alkyl ethers include polyoxyethylene lauryl ether, polyoxyethylene cetyl ether, polyoxyethylene stearyl ether, polyoxyethylene oleyl ether, and polyoxyethylene behenyl ether.

Examples of the polyoxyethylene alkylphenyl ethers include polyoxyethylene nonylphenyl ether and polyoxyethylene octylphenyl ether.

Examples of the polyoxyethylene fatty acid esters include polyoxyethylene monolaurate, polyoxyethylene monooleate, and polyoxyethylene monostearate.

Examples of the sorbitan fatty acid esters include sorbitan monolaurate, sorbitan monopalmitate, sorbitan monostearate, and sorbitan monooleate.

Examples of the polyoxyethylene sorbitan fatty acid esters include polyoxyethylene sorbitan monolaurate, polyoxyethylene sorbitan monopalmitate, and polyoxyethylene sorbitan monostearate.

Examples of the glycerol esters include glyceryl monomyristate, glyceryl monostearate, and glyceryl monooleate.

Examples of the derivatives thereof include polyoxyethylene alkylphenyl-formaldehyde condensates and polyoxyethylene alkyl ether phosphates.

Preferred examples of the segmented polyalkylene glycols having a hydrophobic segment and a hydrophilic segment include those represented by the following formula:

$$H\text{-}(OCH_2CH_2)_q\text{-}(A)_p\text{-}(CH_2CH_2O)_q\text{-}H$$

wherein A represents $-CH(CH_3)CH_2O-$ or $-CH(CH_3)CH_2CH_2O-$, p is an integer of 5 to 200, and q is an integer of 2 to 400. In order to achieve easy adsorption to PTFE resin, p is preferably 15 to 40 and q is preferably 7 to 100.

Preferred among these are polyoxyethylene alkyl ethers, segmented polyalkylene glycols, and alkylamine oxides, and more preferred are polyoxyethylene alkyl ethers and segmented polyalkylene glycols.

The concentration of the nonionic surfactant in the aqueous solution is preferably 0.50% by mass or more, more preferably 0.75% by mass or more, still more preferably 1.00% by mass or more, while preferably 4.00% by mass or less, more preferably 3.50% by mass or less, still more preferably 3.00% by mass or less.

The amount of the aqueous solution added relative to the PTFE powder is preferably 15% by mass or more, more preferably 20% by mass or more, still more preferably 25% by mass or more, while preferably 45% by mass or less, more preferably 40% by mass or less, still more preferably 35% by mass or less.

The wetting can be performed in any suitable device such as a plow blender, a Waring blender, a paddle blender, and a ribbon blender. These devices may or may not have a high-speed element.

The wetting can also be performed in an apparatus for applying mechanical force (a granulator) described below.

The wet PTFE powder may be disintegrated by a known method so as to achieve a target particle size.

Examples of methods for applying mechanical force include a method of tumbling and a method of stirring. The tumbling herein refers to a state in which PTFE particles rotate and move around while rubbing against each other, or while being in contact with an inner wall surface of a granulator. Examples of the granulator used for tumbling and granulating a PTFE powder include a disc-type rotating granulator, a V-type blender, a C-type blender, an inclined disc, and a side-rotating granulator.

Examples of the method of stirring include a method using a high-speed stirrer.

The conditions of tumbling and stirring, such as speed, time, and temperature, may be set depending on the target physical properties such as apparent density and flowability.

The wet powder subjected to the mechanical force can be dried by vacuum, high-frequency waves, hot air, or the like. The drying temperature is preferably 200°C or higher, more preferably 210°C or higher, still more preferably 220°C or higher, even more preferably 230°C or higher, while preferably 270°C or lower, more preferably 260°C or lower, still more preferably 250°C or lower.

Too low a drying temperature may cause insufficient removal of water and the surfactant, while too high a drying temperature may cause partial melting of the PTFE particles, which may decrease the tensile strength and elongation.

Before drying within the temperature range described above, low-temperature drying may be performed. This enables more efficient removal of water and the surfactant. The temperature of low-temperature drying is preferably 100°C or higher, more preferably 110°C or higher, while preferably 180°C or lower, more preferably 150°C or lower.

In order to more sufficiently remove water and the surfactant, the drying time in total is preferably 5 hours or longer, more preferably 8 hours or longer, still more preferably 10 hours or longer, even more preferably 15 hours or longer, while preferably 100 hours or shorter, more preferably 50 hours or shorter, still more preferably 30 hours or shorter.

In order to more efficiently remove water and the surfactant, the wind speed during drying is preferably 0.01 m/s or more, more preferably 0.03 m/s or more, still more preferably 0.05 m/s or more, even more preferably 0.1 m/s or more. In order to reduce scattering of the powder, the wind speed during drying is preferably 50 m/s or less, more preferably 30 m/s or less, still more preferably 10 m/s or less.

The drying can be performed using an electric furnace or a steam furnace. For example, the drying can be performed using an electric furnace such as a parallel-flow box electric furnace, a ventilated box electric furnace, a ventilated conveyor electric furnace, a band electric furnace, a radiating conveyor electric furnace, a fluidized-bed electric furnace, a vacuum electric furnace, a stirring electric furnace, an airflow electric furnace, or a hot-air circulation electric furnace, or a steam furnace corresponding to any of these (a device having the name with the term steam furnace instead of the term electric furnace in the names of the above electric furnaces). In order to more efficiently remove water and a fluorine-containing compound, preferred are a parallel-flow box electric furnace, a ventilated box electric furnace, a ventilated conveyor electric furnace, a band electric furnace, a fluidized-bed electric furnace, a hot-air circulation electric furnace, and steam furnaces corresponding to these (devices having the names with the term steam furnace instead of the term electric furnace in the names of the above electric furnaces).

In order to more efficiently remove water and the surfactant, the drying is preferably performed while the wet PTFE powder is placed in a container having air permeability on the bottom surface and/or a side surface. The container having air permeability on the bottom surface and/or a side surface may be any container that can withstand the drying temperature, and is preferably made of metal such as stainless steel.

The container having air permeability on the bottom surface and/or a side surface is preferably a tray (vat) having air permeability on the bottom surface and/or a side surface, more preferably a tray (mesh tray) having the bottom surface and/or a side surface made of mesh.

The mesh is preferably either a woven wire mesh or a perforated metal.

The opening size of the mesh is preferably 2000 μm or smaller (10 mesh or greater in the ASTM standards), more preferably 595 μm or smaller (30 mesh or greater), still more preferably 297 μm or smaller (50 mesh or greater), further

preferably 177 μm or smaller (80 mesh or greater), even more preferably 149 μm or smaller (100 mesh or greater), particularly preferably 74 μm or smaller (200 mesh or greater), while preferably 25 μm or larger (500 mesh or smaller).

In the case where the mesh is a woven wire mesh, examples of weaving methods include plain weave, twill weave, plain Dutch weave, and twilled Dutch weave.

In the case where the mesh is a perforated metal, the open area is preferably 10% or more, more preferably 20% or more, still more preferably 30% or more, while preferably 95% or less.

In order to more efficiently remove water and the surfactant, the amount of the wet powder placed for drying is preferably 10 g/cm$^2$ or less, more preferably 8 g/cm$^2$ or less, still more preferably 5 g/cm$^2$ or less, particularly preferably 3 g/cm$^2$ or less, while preferably 0.01 g/cm$^2$ or more, more preferably 0.05 g/cm$^2$ or more, still more preferably 0.1 g/cm$^2$ or more.

The obtained granulated powder may be classified by a known method such as airflow classification. Classification can remove fine particles having very small particle sizes or coarse particles having very large particle sizes and can lead to a granulated powder having a desired average particle size or a desired particle size distribution.

The PTFE granulated powder of the disclosure can be suitably used, for example, as a molding material in molding methods such as compression molding, ram extrusion molding, and isostatic compression molding.

Although the embodiments have been described above, it will be understood that various modifications in form and detail can be made without departing from the spirit and scope of the claims.

## EXAMPLES

Next, the disclosure will be described in more detail with reference to examples, but the disclosure is not limited to these examples.

Various physical properties were determined by the following methods.

### <Water Content>

Before and after heating approximately 20 g of the PTFE granulated powder at 150°C for 2 hours, the masses were measured and the water content was calculated according to the following equation. Three samples were taken and, for each sample, the water content was calculated. The average thereof was then calculated, which was adopted as the water content.

Water content (% by mass) = [(mass (g) of PTFE granulated powder before heating) - (mass (g) of PTFE granulated powder after heating)]/(mass (g) of PTFE granulated powder before heating) × 100

### <Z Value>

A 200-g portion of the PTFE granulated powder was charged into a mold having a diameter of 50 mm and held under a molding pressure of 300 kg/cm$^2$ for 5 minutes. The obtained preform (approximately 50 mm in diameter and 50 mm in thickness) was heat-treated at 370°C for 2 hours. The resulting molded article was cut horizontally on a lathe at a position (central portion) approximately 25 mm from an end, and the Z value at the center of the cut portion was determined based on the Z-value determination method of the XYZ color system defined by the International Commission on Illumination.

### <Average Particle Size>

Standard 10-, 20-, 32-, 48-, 60-, and 80-mesh (inch mesh) sieves were stacked in this order from the top, and the PTFE granulated powder was placed on the 10-mesh sieve. The sieves were vibrated to allow finer PTFE granulated powder particles to fall downward to lower sieves, and the proportion of the PTFE granulated powder retained on each sieve was determined in % by mass. On log-probability paper, the cumulative percentage of the retained proportion was plotted (on the vertical axis) against the opening size of each sieve (on the horizontal axis). The plotted points were connected by a straight line and the particle size corresponding to 50% by mass on this straight line was determined, which was defined as the average particle size.

### <Apparent density>

The apparent density was determined in accordance with JIS K6891.

<Average aspect ratio>

The average aspect ratio was determined by observing the PTFE granulated powder with a video microscope, performing image analysis on 50 or more particles randomly selected, and calculating the average of the ratios of the major axis to the minor axis.

<Tensile strength and elongation>

A 5-g portion of the PTFE granulated powder was charged into a mold having dimensions of 97 mm × 18 mm, gradually pressurized up to approximately 300 kg/cm$^2$, and held at the same pressure for 2 minutes, whereby a preform was prepared. The preform was taken from the mold and placed in an electric furnace maintained at 370°C, followed by firing for 5.5 hours and cooling at 50°C/hr, whereby a fired article was obtained. A JIS No. 3 dumbbell-shaped test specimen was punched out of this fired article, and tensile testing was performed in accordance with JIS K6891-58 using an autograph having a total load capacity of 500 kg at a tensile speed of 200 mm/min, thereby measuring the stress at break and the elongation (elongation at break).

<High-temperature volatile content>

The high-temperature volatile content was calculated in accordance with JIS K6891 and according to the following equation using the mass of the PTFE granulated powder measured after heating at 370°C for 2 hours.

High-temperature volatile content (% by mass) = [(mass (g) of PTFE granulated powder before heating) - (mass (g) of PTFE granulated powder after heating)]/(mass (g) of PTFE granulated powder before heating) × 100

<Flowability>

The flowability was determined in accordance with the method described in JP H03-259925.

Specifically, the device used for determination includes upper and lower hoppers 31 and 32 supported on a support stand 42 with their centerlines aligned, as shown in FIG. 1 (corresponding to FIG. 3 of JP H03-259925). The upper hopper 31 has a diameter of 74 mm at an inlet 33, a diameter of 12 mm at an outlet 34, and a height of 123 mm from the inlet 33 to the outlet 34, and is provided with a partition 35 at the outlet 34, which allows the powder inside to be held or released as appropriate. The lower hopper 32 has a diameter of 76 mm at an inlet 36, a diameter of 11 mm at an outlet 37, and a height of 120 mm from the inlet 36 to the outlet 37, and is provided with a partition 38 at the outlet 37, as in the case of the upper hopper. The distance between the upper hopper and the lower hopper is adjusted so that the distance between the partitions is 15 cm. In FIG. 1, the reference numerals 39 and 40 denote outlet covers of the respective hoppers, while the reference numeral 41 denotes a receiver for the fallen powder.

The flowability is determined as follows: specifically, approximately 200 g of the target powder is left in a room controlled at a temperature of 23.5 to 24.5°C for 4 hours or longer and sieved through a 10-mesh sieve (opening size: 1680 micron (μm)), and then the flowability is determined at the same temperature.

(I) First, using a 30-cc-capacity cup, exactly one cup of the target powder is fed into the upper hopper 31. The partition 35 is immediately pulled out to cause the powder to fall into the lower hopper. When the powder does not fall, the powder is tapped with wire and made to fall. After the powder completely falls into the lower hopper 32 and is left for 15 ± 2 seconds, the partition 38 of the lower hopper is pulled out to observe whether the powder flows down through the outlet 37. When 99% by mass or more of the powder flows down within 8 seconds, the powder is judged to fall.

(II) The above determination process was repeated three times to observe whether the powder falls. When the powder flows down in two or more of the three processes, the flowability is judged as "good"; when the powder falls in none of the processes, the flowability is judged as "poor"; and when the powder flows down only once out of the three processes, two additional determination processes are performed. When the powder falls in both of the additional processes, the flowability is finally judged as "good", and otherwise judged as "poor".

(III) For the powders judged as having "good" flowability in the above determination processes, using the same 30-cc cup, two cups of the powder are fed into the upper hopper, followed by the determination process in the same manner as described above. When the result exhibits "good" flowability, the number of cups of the powder is increased sequentially and the process is continued until the flowability becomes "poor," up to a maximum of eight cups. For each determination process, the powder flowed out through the lower hopper in the previous determination process may be used again.

(IV) In the above determination processes, the PTFE powder is less likely to flow down as the amount used increases.

Accordingly, the flowability of the powder is defined as the number obtained by subtracting 1 from the number of cups at which the flowability becomes "poor".

<Coloration of molded article>

Based on the Z value measured above, the evaluation was performed according to the following criteria.

○○: Z value was 95 or more
○: Z value was 90 or more and less than 95
×: Z value was less than 90

<Crack Resistance>

A 200-g portion of the PTFE granulated powder was charged into a mold having an outer diameter of 50 mm and an inner diameter of 20 mm and held under a molding pressure of 300 $kg/cm^2$ for 5 minutes. The obtained preform (approximately 50 mm in outer diameter, 20 mm in inner diameter, and 50 mm in thickness) was heated to 370°C, held at 370°C for 5.5 hours, and then cooled to 40°C at 50°C/hr, so that a molded article was obtained. From this molded article, a film having a thickness of 0.1 mm was prepared using a lathe. The number of cracks was visually counted and converted into the number of cracks per 100 g for evaluation.

Crack resistance (cracks/100 g) = (number of cracks in film (cracks))/(film weight (g)) × 100

Example 1

A 2.0-kg portion of a PTFE molding powder having an average particle size of 50 μm obtained by suspension polymerization was charged into a ribbon blender, and mixed with 0.8 kg of an aqueous solution of surfactant A ($H-(OCH_2CH_2CH_2)_n-(OCH_2CH_2)_m-OH$), which had been diluted to 1% with deionized water in advance, for 3 minutes to obtain a wet powder. The obtained wet powder was fed into and disintegrated in a disintegrator equipped with a discharge-port mesh having an opening size of Φ0.8 mm, so that the particle size thereof was adjusted. The powder was then conditioned for 3 minutes in a disc-type rotating granulator. Next, the wet powder was fed into a stainless steel mesh tray and heated in a hot-air dryer at 120°C for 7 hours, followed by drying at 250°C for 8 hours. After drying, coarse particles were removed through a 10-mesh sieve and various measurements and evaluations were performed.

Examples 2 to 4 and Comparative Example 1

Except that the type of the surfactant was changed as shown in Table 1, PTFE granulated powders were obtained in the same manner as in Example 1.

Comparative Example 2

Except that the drying conditions were changed as shown in Table 1, a PTFE granulated powder was obtained in the same manner as in Example 3.

Comparative Example 3

Except that the drying conditions were changed as shown in Table 1, a PTFE granulated powder was obtained in the same manner as in Example 4.

The PTFE granulated powders obtained above were evaluated by the methods described above. The results are shown in Table 1.

[Table 1]

| | | Example 1 | Example 2 | Example 3 | Example 4 | Comparative Example 1 | Comparative Example 2 | Comparative Example 3 |
|---|---|---|---|---|---|---|---|---|
| Surfactant | Type | A | B | C | D | E | C | D |
| | Concentration (mass%) | 1.0 | 1.0 | 1.0 | 1.0 | 1.0 | 1.0 | 1.0 |
| | Amount added (mass%) | 40 | 40 | 40 | 40 | 40 | 40 | 40 |
| Drying (low temp.) | Temperature (°C) | 120 | 120 | 120 | 120 | 120 | 120 | 180 |
| | Time (hr) | 7 | 7 | 7 | 7 | 7 | 7 | 12 |
| Drying (high temp.) | Temperature (°C) | 250 | 250 | 250 | 250 | 250 | - | - |
| | Time (hr) | 8 | 8 | 8 | 8 | 8 | - | - |
| Shape of drying tray | | Mesh tray | Mesh tray | Mesh tray | Mesh tray | Mesh tray | Mesh tray | Mesh tray |
| Z value | | 96 | 92 | 98 | 98 | 55 | 77 | 88 |
| Water content (mass%) | | 0.001 | 0.001 | 0.001 | 0.001 | 0.001 | 0.040 | 0.003 |
| Average particle size (μm) | | 210 | 510 | 520 | 500 | 420 | 520 | 490 |
| Apparent density(g/mL) | | 0.62 | 0.73 | 0.75 | 0.72 | 0.69 | 0.70 | 0.73 |
| Average aspect ratio | | 1.12 | 1.15 | 1.09 | 1.14 | 1.18 | 1.17 | 1.18 |
| Tensile strength (MPa) | | 42 | 44 | 44 | 41 | 39 | 32 | 41 |
| Elongation (%) | | 330 | 320 | 320 | 330 | 330 | 290 | 330 |
| High-temperature volatile content (mass%) | | 0.001 | 0.002 | 0.003 | 0.001 | 0.001 | 0.010 | 0.002 |
| Flowability (times) | | 1.0 | 2.0 | 3.0 | 1.0 | 0.5 | 0.5 | 1.0 |
| Coloration of molded article | | ○○ | ○ | ○○ | ○○ | × | × | × |
| Crack resistance (cracks/100 g) | | 0 | 0 | 0 | 0 | 0 | 6.5 | 0 |

The abbreviations in the table are as follows.

A: $H-(OCH_2CH_2CH_2)_n-(OCH_2CH_2)_m-OH$
B: $C_{12}H_{25}-O-(CH_2CH_2O)_9-H$
C: $C_{12}H_{25}-O-(CH_2CH_2O)_9-H$ (the structure of the alkyl group differs from that of surfactant B)
D: $C_{12}H_{25}-N^+(CH_3)_2-O^-$
E: $C_{12}H_{25}-SO_3Na$

REFERENCE SIGNS LIST

31: upper hopper
32: lower hopper
33, 36: inlet
34, 37: outlet
35, 38: partition
39, 40: outlet cover
41: receiver
42: support stand

## Claims

1. A polytetrafluoroethylene granulated powder having a water content of 0.020% by mass or less and a Z value of 90 or more.

2. The polytetrafluoroethylene granulated powder according to claim 1, wherein a granulation binder used for granulation is a nonionic surfactant aqueous solution.

3. The polytetrafluoroethylene granulated powder according to claim 2, wherein the nonionic surfactant aqueous solution includes at least one selected from the group consisting of a polyoxyethylene alkyl ether, a segmented polyalkylene glycol, and an alkylamine oxide.

4. The polytetrafluoroethylene granulated powder according to any one of claims 1 to 3, wherein the polytetrafluoroethylene granulated powder has an average particle size of 200 to 700 μm.

5. The polytetrafluoroethylene granulated powder according to claim 4, wherein the average particle size is 200 to 600 μm.

6. The polytetrafluoroethylene granulated powder according to any one of claims 1 to 5, wherein the polytetrafluoroethylene granulated powder has an apparent density of 0.60 to 0.90 g/mL.

7. The polytetrafluoroethylene granulated powder according to any one of claims 1 to 6, wherein the polytetrafluoroethylene granulated powder has an average aspect ratio of 1.25 or less.

8. The polytetrafluoroethylene granulated powder according to any one of claims 1 to 7, wherein the polytetrafluoroethylene granulated powder has a high-temperature volatile content of 0.050% by mass or less.

9. The polytetrafluoroethylene granulated powder according to any one of claims 1 to 8, wherein the water content is 0.001% by mass or less.

FIG.1

33
31
34
39
35
36
32
37
40
38
42
41

## INTERNATIONAL SEARCH REPORT

International application No. **PCT/JP2024/038238**

**A. CLASSIFICATION OF SUBJECT MATTER**

***C08J 3/12***(2006.01)i
FI: C08J3/12 Z CEW

According to International Patent Classification (IPC) or to both national classification and IPC

**B. FIELDS SEARCHED**

Minimum documentation searched (classification system followed by classification symbols)

C08J3/00-3/28; B29B9/00-9/16

Documentation searched other than minimum documentation to the extent that such documents are included in the fields searched

Published examined utility model applications of Japan 1922-1996
Published unexamined utility model applications of Japan 1971-2025
Registered utility model specifications of Japan 1996-2025
Published registered utility model applications of Japan 1994-2025

Electronic data base consulted during the international search (name of data base and, where practicable, search terms used)

**C. DOCUMENTS CONSIDERED TO BE RELEVANT**

| Category* | Citation of document, with indication, where appropriate, of the relevant passages | Relevant to claim No. |
|---|---|---|
| X | JP 10-298300 A (DAIKIN INDUSTRIES, LTD.) 10 November 1998 (1998-11-10) claims, paragraphs [0009], [0010], [0016]-[0025], [0048], [0059]-[0066], examples | 1-9 |
| X | WO 99/12996 A1 (DAIKIN INDUSTRIES, LTD.) 18 March 1999 (1999-03-18) claims, specification, page 6, line 6 to page 8, line 5 from the bottom, page 9, lines 3-24, examples | 1-9 |
| A | JP 47-12332 A (IMPERIAL CHEMICAL INDUSTRIES LTD.) 22 June 1972 (1972-06-22) claims, examples | 1-9 |
| A | JP 10-316763 A (DAIKIN INDUSTRIES, LTD.) 02 December 1998 (1998-12-02) claims, examples | 1-9 |
| A | JP 10-259252 A (DAIKIN INDUSTRIES, LTD.) 29 September 1998 (1998-09-29) claims, examples | 1-9 |
| A | WO 97/17392 A1 (DAIKIN INDUSTRIES, LTD.) 15 May 1997 (1997-05-15) claims, examples | 1-9 |

☑ Further documents are listed in the continuation of Box C. ☑ See patent family annex.

* Special categories of cited documents:
"A" document defining the general state of the art which is not considered to be of particular relevance
"D" document cited by the applicant in the international application
"E" earlier application or patent but published on or after the international filing date
"L" document which may throw doubts on priority claim(s) or which is cited to establish the publication date of another citation or other special reason (as specified)
"O" document referring to an oral disclosure, use, exhibition or other means
"P" document published prior to the international filing date but later than the priority date claimed
"T" later document published after the international filing date or priority date and not in conflict with the application but cited to understand the principle or theory underlying the invention
"X" document of particular relevance; the claimed invention cannot be considered novel or cannot be considered to involve an inventive step when the document is taken alone
"Y" document of particular relevance; the claimed invention cannot be considered to involve an inventive step when the document is combined with one or more other such documents, such combination being obvious to a person skilled in the art
"&" document member of the same patent family

| Date of the actual completion of the international search | Date of mailing of the international search report |
|---|---|
| **07 January 2025** | **21 January 2025** |

| Name and mailing address of the ISA/JP | Authorized officer |
|---|---|
| **Japan Patent Office (ISA/JP)**<br>**3-4-3 Kasumigaseki, Chiyoda-ku, Tokyo 100-8915**<br>**Japan** | Telephone No. |

Form PCT/ISA/210 (second sheet) (July 2022)

**INTERNATIONAL SEARCH REPORT**

International application No. **PCT/JP2024/038238**

C. DOCUMENTS CONSIDERED TO BE RELEVANT

| Category* | Citation of document, with indication, where appropriate, of the relevant passages | Relevant to claim No. |
|---|---|---|
| A | JP 10-298299 A (DAIKIN INDUSTRIES, LTD.) 10 November 1998 (1998-11-10) claims, examples | 1-9 |
| A | JP 10-251413 A (DAIKIN INDUSTRIES, LTD.) 22 September 1998 (1998-09-22) claims, examples | 1-9 |
| A | WO 97/15611 A1 (DAIKIN INDUSTRIES, LTD.) 01 May 1997 (1997-05-01) claims, examples | 1-9 |
| A | WO 01/051560 A1 (DAIKIN INDUSTRIES, LTD.) 19 July 2001 (2001-07-19) claims, examples | 1-9 |
| A | JP 4-218534 A (DAIKIN INDUSTRIES, LTD.) 10 August 1992 (1992-08-10) claims, examples | 1-9 |
| A | WO 99/06475 A1 (DAIKIN INDUSTRIES, LTD.) 11 February 1999 (1999-02-11) claims, examples | 1-9 |

Form PCT/ISA/210 (second sheet) (July 2022)

**INTERNATIONAL SEARCH REPORT**
**Information on patent family members**

International application No.
**PCT/JP2024/038238**

| Patent document cited in search report | Publication date (day/month/year) | Patent family member(s) | Publication date (day/month/year) |
|---|---|---|---|
| JP 10-298300 A | 10 November 1998 | US 6440559 B1<br>claims, examples<br>WO 1998/047950 A1<br>EP 980887 A1<br>CN 1252821 A<br>KR 10-2001-0006387 A | |
| WO 99/12996 A1 | 18 March 1999 | US 6774169 B1<br>claims, examples<br>EP 1016687 A1<br>KR 10-2001-0021602 A<br>CN 1268152 A | |
| JP 47-12332 A | 22 June 1972 | (Family: none) | |
| JP 10-316763 A | 02 December 1998 | US 6458457 B1<br>claims, examples<br>WO 1998/041567 A1<br>EP 969034 A1<br>CN 1249765 A<br>KR 10-0587755 B1 | |
| JP 10-259252 A | 29 September 1998 | US 6300408 B1<br>claims, examples<br>WO 1998/041568 A1<br>EP 970986 A1<br>CN 1249767 A<br>KR 10-0537035 B1 | |
| WO 97/17392 A1 | 15 May 1997 | US 2002/0002234 A1<br>claims, examples<br>EP 861865 A1<br>KR 10-1999-0067250 A<br>CN 1202185 A | |
| JP 10-298299 A | 10 November 1998 | US 6350801 B1<br>claims, examples<br>WO 1998/047949 A1<br>EP 980886 A1<br>CN 1252820 A<br>KR 10-2001-0006388 A | |
| JP 10-251413 A | 22 September 1998 | US 6451903 B1<br>claims, examples<br>WO 1998/041569 A1<br>EP 969035 A1<br>KR 10-2006-0006103 A<br>CN 1249766 A | |
| WO 97/15611 A1 | 01 May 1997 | US 6037402 A<br>claims, examples<br>EP 857747 A1<br>KR 10-1999-0063912 A<br>CN 1200743 A | |
| WO 01/051560 A1 | 19 July 2001 | (Family: none) | |
| JP 4-218534 A | 10 August 1992 | US 5321059 A<br>claims, examples<br>EP 454043 A2 | |

Form PCT/ISA/210 (patent family annex) (July 2022)

**INTERNATIONAL SEARCH REPORT**
**Information on patent family members**

International application No.
**PCT/JP2024/038238**

| Patent document cited in search report | Publication date (day/month/year) | Patent family member(s) | Publication date (day/month/year) |
|---|---|---|---|
| WO 99/06475 A1 | 11 February 1999 | EP 1000961 A1<br>claims, examples<br>KR 10-2001-0021601 A<br>CN 1265688 A | |

Form PCT/ISA/210 (patent family annex) (July 2022)

## REFERENCES CITED IN THE DESCRIPTION

*This list of references cited by the applicant is for the reader's convenience only. It does not form part of the European patent document. Even though great care has been taken in compiling the references, errors or omissions cannot be excluded and the EPO disclaims all liability in this regard.*

### Patent documents cited in the description

- JP H10298300 A
- JP H08208929 A
- JP 2005527652 T
- JP H03259925 B